# EUROPÄISCHE PATENTSCHRIFT

(11) **EP 1 718 989 B1**
(45) Veröffentlichungstag und Bekanntmachung des Hinweises auf die Patenterteilung: **27.06.2007**
(21) Anmeldenummer: 05707508.7
(22) Anmeldetag: 18.02.2005
(51) Int. Cl.: G01S 17/08, G01C 3/08, G01B 3/10

(54) **HANDGEHALTENE VORRICHTUNG ZUM MESSEN VON DISTANZEN**
HAND-HELD DEVICE FOR MEASURING DISTANCES
DISPOSITIF MANUEL POUR MESURER DES DISTANCES

(30) Priorität: 19.02.2004 EP 04003784
(43) Veröffentlichungstag der Anmeldung: 08.11.2006
(73) Patentinhaber: Leica Geosystems AG, 9435 Heerbrugg (CH)
(72) Erfinder: BÖGEL, Gerhard, CH-9436 Balgach (CH); BAERTLEIN, Hugh, I-19032 Lerici (IT)
(74) Vertreter: Kaminski, Susanne
(86) Internationale Anmeldenummer: PCT/EP2005/001703
(87) Internationale Veröffentlichungsnummer: WO 2005/083465

(56) Entgegenhaltungen:
- EP-A- 0 828 165
- EP-A- 1 475 608
- US-A- 5 433 014

## Beschreibung

Die Erfindung betrifft eine Vorrichtung zum handgehaltenen Messen von Distanzen zu einem Oberflächenbereich eines Objekts mit einem Gehäuse und einer Optik für modulierte Sendestrahlen und für vom Oberflächenbereich reflektierte Strahlen der Sendestrahlen nach dem Oberbegriff des Anspruchs 1.

Derartige handgehaltene Vorrichtungen zum optischen Messen von Distanzen sind seit Jahren bekannt und werden heute zu hunderttausenden für unterschiedlichste Anwendungen, insbesondere im Bauwesen, eingesetzt. Mit ihnen können Distanzen zwischen einem Messanschlag der Vorrichtung und einem Oberflächenbereich eines Objekts innerhalb eines Distanzmessbereichs von wenigen Dezimetern bis zu beispielsweise 30 Metern mit einer Genauigkeit von wenigen Millimetern optisch gemessen werden. Dabei werden zum Messen von Distanzen von der Vorrichtung über eine Optik modulierte optische Strahlen gegen das zu messende Objekt ausgesendet. Wenigstens ein Teil der Sendestrahlen wird vom Oberflächenbereich des Objekts in Richtung der Vorrichtung zurück reflektiert. Über die Optik werden vom Oberflächenbereich reflektierte Strahlen beabstandet zu den Sendestrahlen wieder eingesammelt und von einem Empfänger der Vorrichtung in ein elektrisches Signal umgewandelt. Aufgrund der Ausbreitungsgeschwindigkeit optischer Strahlen kann durch Auswertung des elektrischen Signals die Distanz zwischen dem Messanschlag und dem Oberflächenbereich des Objekts ermittelt werden.

Aufgrund einer Parallaxe zwischen den Sendestrahlen und den dazu beabstandeten, eingesammelten, reflektierten Strahlen entfernen sich beim Messen auf einen Oberflächenbereich in der Nähe der Optik die eingesammelten, reflektierten Strahlen zunehmend vom Zentrum des Empfängers. Je geringer der Abstand des zu messenden Oberflächenbereichs von der Optik ist, umso weniger reflektierte Sendestrahlen können in der Regel vom Empfänger umgewandelt werden. Unterhalb eines kritischen Abstands des Oberflächenbereichs von der Optik unterschreitet das elektrische Signal einen kritischen Wert, so dass ein Messen von Distanzen unterhalb einer kritischen Distanz beeinträchtigt oder sogar ganz verunmöglicht wird. Aus dem Stand der Technik sind unterschiedliche Massnahmen bekannt, um die kritische Distanz - unterhalb derer optisches Messen von Distanzen nicht mehr möglich ist - möglichst gering zu halten.

Aus der DE 43 16 348 A1 ist beispielsweise eine derartige Vorrichtung zur optischen Entfernungsmessung mit einer biaxialen Optik und einer in deren Brennebene beweglichen Lichtleitfaser bekannt. Über die Lichtleitfaser werden an einem Objekt reflektierte, eingesammelte Strahlen eines von der Vorrichtung ausgesendeten Laserbündels zu einem Empfänger weitergeleitet. Die Lichtleitfaser wird dabei den in Abhängigkeit der Distanz wandernden, reflektierten Strahlen mechanisch nachgeführt. Diese Nachführung beeinträchtigt einerseits die Messgeschwindigkeit und erfordert andererseits eine aufwändige Konstruktion. Dennoch können Distanzmessungen auf Objekte innerhalb eines kritischen Abstands von zwanzig Zentimetern vor der Optik nicht ausgeführt werden.

Aus der WO 03 / 002 939 A1 ist eine handgehaltene Vorrichtung mit biaxialer Optik zur optischen Distanzmessung und mit einem optischen Detektor bekannt, der eine in der Brennebene ausgedehnt ausgebildete, lichtempfindliche Detektionsfläche aufweist. Durch diese in der Brennebene ausgedehnte Detektionsfläche kann von den bei kleiner werdenden Abständen weg wandernden, eingesammelten, reflektierten Strahlen ein grösserer Anteil detektiert werden. Trotz der ausgedehnten Detektionsfläche weist jedoch auch diese Vorrichtung einen kritischen Abstandsbereich bis zu etwa zehn Zentimetern vor der Optik auf, in dem optisches Messen von Distanzen nicht möglich ist. In der Praxis werden daher kurze Distanzen nach wie vor mit altbewährten, körperlichen Messmitteln - wie beispielsweise Zollstock oder Rollmeter - gemessen.

Aus der EP 1 475 608 ist eine handgehaltene Vorrichtung zur optischen Distanzmessung bekannt. Als Anschlag wird ein Zollstock verwendet. Diese Druckschrift fällt unter Artikel 54(3) EPÜ.

Es ist Aufgabe der Erfindung, Mängel des Standes der Technik zu beheben, und eine handgehaltene Vorrichtung zum Messen von Distanzen zu einem Oberflächenbereich eines Objekts mit einem Gehäuse und einer Optik für modulierte Sendestrahlen und für vom Oberflächenbereich reflektierte Strahlen bereitzustellen, die eine geringere kritische Distanz, unterhalb derer ein Messen von Distanzen nicht mehr möglich ist, aufweist.

Eine weitere Aufgabe der Erfindung ist es, eine Vorrichtung zum Messen von Distanzen bis 0 cm bereitzustellen.

Eine weitere Aufgabe ist die Bereitstellung einer Vorrichtung, vermittels welcher wenigstens zwei Distanzmessungen parallel durchführbar, und gegebenenfalls - beispielsweise durch Addition, Differenzbildung, Flächenbestimmung, etc. - miteinander kombinierbar, sind.

Diese Aufgaben werden durch eine Vorrichtung mit den Merkmalen des Patentanspruchs 1 gelöst, bzw. durch weitere alternative oder vorteilhafte Aus- bzw. Weiterbildungen der Erfindung entsprechend den Merkmalen der abhängigen Patentansprüche.

Eine erfindungsgemässe Vorrichtung zum handgehaltenen Messen von Distanzen zu einem Oberflächenbereich eines Objekts weist ein Gehäuse und eine in das Gehäuse eingelassene Optik auf. Zum optischen Messen der Distanz zum Oberflächenbereich werden von der Vorrichtung über die Optik modulierte optische Sendestrahlen in Form eines Strahlenbündels gegen den Oberflächenbereich ausgesendet. Ein Teil der vom Oberflächenbereich reflektierten Strahlen der Sendestrahlen wird von der Optik wieder eingesammelt und für ein Bestimmen von Distanzen in Form digitaler Messwerte von einer Auswerteeinheit elektronisch ausgewertet. Diese Art der Distanzmessung über die Optik wird in der Folge als elektro-optische oder als optische Messung bezeichnet.
Zusätzlich weist die Vorrichtung ein mit dem Gehäuse verbundenes erstes Bauteil auf, das zum Bestimmen kurzer Distanzen in Ausbreitungsrichtung der Sendestrahlen über das Gehäuse hinaus erstreckbar ist. Gemäss der Erfindung ist das erste Bauteil derart ausgebildet, dass es einerseits zum Messen kurzer Distanzen eingesetzt werden kann und andererseits als Abstandshalter für die optische Messung. Die Erfindung sieht weiters eine Einrichtung zur automatischen Erfassung einer von der Erstreckung dieses Bauteils abhängigen Distanz vor.

Das erste Bauteil der erfindungsgemässen Vorrichtung ist derart gestaltet, dass es verschieden weit über das Gehäuse hinaus erstreckbar ist, und dass in Kombination mit dem Gehäuse die Distanz zu einem Objekt körperlich gemessen werden kann. Zu diesem Zweck ist das erste Bauteil derart geführt, dass ein Ende des ersten Bauteils beim körperlichen Messen im Wesentlichen parallel zum Sendestrahlenbündel an das Objekt herangeführt wird. Durch ein Erfassen der Relativposition zwischen dem Bauteil und dem Gehäuse sowie der Berücksichtigung der Erstreckung des Gehäuses zwischen dessen dem Objekt zugewandten Seite und dem Messanschlag in Richtung des Sendestrahlenbündels kann die körperlich gemessene Distanz zwischen dem Messanschlag und dem Objekt bestimmt werden. Im Weiteren wird das erste Bauteil auch einfach als Bauteil bezeichnet, ein in der Folge in einer Ausführungsform der Erfindung beschriebenes weiteres Bauteil wird als weiteres oder zweites Bauteil bezeichnet. Unter körperlicher Distanzmessung oder Messung vermittels des Bauteils wird im Folgenden eine Distanzmessung mit dem Bauteil verstanden. Ob die Distanzmessung mit dem ersten oder zweiten Bauteil erfolgt, geht aus dem Zusammenhang hervor.

Das Bestimmen des Distanzwertes kann dabei auf unterschiedliche Art und Weise erfolgen.

Die Erfindung sieht ein Erfassen der zu bestimmenden Distanz durch die Vorrichtung über eine elektronische Einrichtung vor. Dabei wird der mit dem Bauteil gemessene Abstand in an sich bekannter Weise auf einem insbesondere elektromagnetischen oder optischen Wirkprinzip beruhend relativ oder absolut erfasst. Vorteilhaft wird die mit dem Bauteil gemessene Distanz anhand kontaktloser Sensoren registriert. Ein definierter Messanschlag als Nullpunkt der Distanzmessung wird in der Auswerteeinheit automatisch mitberücksichtigt. Der Messanschlag wird im Allgemeinen als Gehäuse-Rückseite, unter Umständen auch als Gehäuse-Frontseite, definiert.

Bei im Gehäuse integriertem Bauteil kann eine Skala oder ein Code am Bauteil aufgebracht sein und vermittels einer Abtast-Einrichtung - z.B. mit einem optischen Sensor - im Gehäuse abgetastet werden. Die Messung auf das Bauteil bzw. auf Skala oder Code auf dem Bauteil vermittels einer Abtast-Einrichtung wird im Weiteren als - z.B. elektro-optische, optische oder magnetische - Abtastung, Ablesen oder Abgreifen bezeichnet.
Je nach Anordnung eines Sensors der Abtast-Einrichtung berücksichtigt die Auswerteeinheit einen vom Abstand des Sensors zum definierten Messanschlag abhängigen Korrekturfaktor zur Distanzmessung vermittels des Bauteils. Der Korrekturfaktor wird dann von der Auswerteeinheit automatisch zum gemessenen Distanzwert addiert bzw. subtrahiert. Die Ausführung kann so sein, dass in der Auswerteeinheit verschiedene Alternativen von Messanschlägen, wie Gehäuse-Rückseite, Gehäuse-Frontseite, oder ausgefahrenes Ende des vollständig oder nicht vollständig ausgefahrenen Bauteils, gespeichert sind und durch eine Taste der entsprechende Messanschlag gewählt werden kann.
Eine andere Möglichkeit ist, der Vorrichtung einen einzigen definierten Messanschlag zuzuordnen und Korrekturfaktoren für die einzelnen Messmittel der Vorrichtung in der Auswerteeinheit zur Verfügung zu stellen. Je nach Wahl des Messmittels (optische Messung, Messung vermittels Bauteil) verwendet die Auswerteeinheit dann automatisch den jeweiligen Korrekturfaktor und zeigt als Distanzwert den korrigierten Wert bis zum Messanschlag an. Vorzugsweise registriert die Auswerteeinheit die Wahl des Messmittels automatisch, es versteht sich jedoch, dass genauso gut Eingabemittel zur Eingabe der Wahl des Messmittels (z.B. Taste für elektro-optische Messung) vorgesehen werden können.

Die Abtastung einer Skala oder eines Codes am Bauteil kann z.B. anhand eines Reflextasters oder einer Lichtschranke in bekannter Art und Weise erfolgen. Eine Möglichkeit ist, das Bauteil mit lichtdurchlässigen und lichtundurchlässigen Strichen zu versehen und über eine LichtschrankenEinrichtung beim Ausfahren des Bauteils die Hell-Dunkel-Wechsel zu zählen. Das Bauteil wird dabei vorzugsweise automatisch ausgefahren.
Eine andere Möglichkeit ist die magnetische Abtastung eines Codes, wie heute im Stand der Technik bekannt. Auch könnte, wenn beim Ausfahren des Bauteils ein Magnetfluss erzeugt wird, der Betrag des Magnetflusses (und des Ausfahrens) über einen Magnetflusssensor bestimmt werden. Ebenso könnten Hall-Sensoren zur Positionsbestimmung eingesetzt werden.
Das Bauteil kann auch derart ausgebildet sein, dass es zur Messung herausgezogen oder automatisch ausgefahren wird, einrastet, und beim Einrasten einen elektronischen oder akustischen Impuls auslöst.
Die Wahl des Sensors kann beispielsweise an einer low-cost Lösung einer Vorrichtung orientiert werden, oder aber an einer Präzisionsmess-Vorrichtung.

Anhand des automatischen Erfassens der Distanzmessung mittels des Bauteils und automatischen Berücksichtigung eines definierten Messanschlags (z.B. der Berücksichtigung der Erstreckung des Gehäuses), ist es auch beim körperlichen Messen möglich, einen in digitaler Form vorliegenden Distanzwert zu bestimmen. Die Vorteile eines digital vorliegenden Messwerts - insbesondere für eine anschliessende Verarbeitung, Speicherung oder Übertragung des Messwerts - liegen auf der Hand. Eine Übertragung kann z.B. auch kabellos mittels Funk-Übertragung oder Bluetooth-Übertragung an eine externe Datenverarbeitungseinrichtung erfolgen.

Die Ausbildung des ersten Bauteils ist erfindungsgemäss derart, dass das Bauteil zusätzlich zum körperlichen Messen kurzer Distanzen in der Funktion eines Abstandshalters für die optische Messung einsetzbar ist. Die Ausbildung des Bauteils als Abstandshalter ermöglicht ein Messen kurzer Distanzen auf optischem Weg. Das Bauteil (im Folgenden auch als Abstandshalter bezeichnet) erstreckt sich dabei z.B. in einer fest vorbestimmten Länge in Ausbreitungsrichtung der Sendestrahlen über das Gehäuse hinaus. Die fest vorbestimmte Länge ist mit Vorteil zumindest so gross wie der kritische Abstand vor dem Gehäuse, in welchem keine optischen Messungen auf Oberflächenbereiche mehr möglich sind, und wird vermittels einer Einrichtung registriert und an die Auswerteeinheit weitergegeben. Von der Auswerteeinheit wird die automatisch registrierte, fest vorbestimmte Länge des Abstandshalters bzgl. der optischen Distanzmessung derart berücksichtigt, dass im erstreckten Zustand durch das dem Gehäuse abgewandte Ende des Abstandshalters der Nullpunkt für die optisch gemessenen, kurzen Distanzen verkörpert wird. Wird die fest vorbestimmte Länge zumindest so gross gewählt wie der kritische Abstand, so können auch Messwerte für sehr kurze Distanzen mittels optischer Messung in digitaler Form erhalten werden.

Weiterbildungen der erfindungsgemässen Vorrichtung sehen ausklappbare, insbesondere auch automatisch ausklappbare, oder in den vorbestimmt erstreckten Zustand selbsttätig ausfahrbare Abstandshalter vor. Dabei kann z.B. durch Knopfdruck sowohl der Abstandshalter ausgefahren oder - geklappt, als auch der Auswerteeinheit die Wahl des Messmittels mitgeteilt werden. Eine automatische Registrierung der Betätigung des Abstandshalters könnte auch akustisch erfolgen, z.B. durch Detektion eines Klicks beim ausklappen.
Wird der Abstandshalter nicht in einen vorbestimmt erstreckten Zustand ausgefahren oder ausgezogen, so kann der erstreckte Zustand mittels der bereits erwähnten Abtast-Einrichtung bestimmt und der Auswerteeinheit weitergegeben werden. Die Auswerteeinheit berechnet dann den erstreckten Zustand des Abstandshalters bzgl. eines Messanschlags als Nullpunkt, d.h. als Messanschlag, für die optische Messung.

In einer Ausführungsform ist eine erfindungsgemässe Vorrichtung derart ausgebildet, dass zusätzlich zur automatischen Abtast-Einrichtung ein mittels des Bauteils gemessener Distanzwert zusätzlich auch einfach durch Ablesen - z.B. über eine erste Skala und eine erste Ablesemarke - durch den Benutzer erfassbar ist. Dabei können die erste Skala und die erste Ablesemarke auf dem Bauteil bzw. dem Gehäuse angeordnet sein. Je nach Ausbildung des Bauteils können hingegen die erste Skala auf dem Gehäuse und die erste Ablesemarke auf dem Bauteil angeordnet sein. Bei geeigneter Gestaltung der ersten Skala kann der körperlich gemessene Distanzwert - vom Messanschlag bis zum Objekt - über die erste Ablesemarke vom Benutzer direkt auf der ersten Skala abgelesen werden. Die Ablesung durch den Benutzer bietet die Möglichkeit, Distanzwerte, die z.B. nur zur Information oder Überprüfung gewünscht werden, ohne digitale Erfassung einfach auf einer Skala abzulesen.

Die Erfindung kann aber auch derart ausgeführt werden, dass eine Speichertaste vorgesehen ist, und nach einer Messung der jeweilige Messwert - falls gewünscht - durch Betätigen der Taste gespeichert wird. Messwerte, die nicht aufgenommen oder weiterverarbeitet werden sollen, werden in digitaler Form erhalten und angezeigt, bei Nicht-Betätigung der Speichertaste aber automatisch wieder verworfen.

Eine Weiterbildung der Erfindung sieht eine zusätzliche, am Gehäuse angeordnete, zweite Skala vor, deren Nullpunkt vorzugsweise durch den Messanschlag verkörpert wird und mit Vorteil an einer dem Bauteil benachbarten Gehäusekante angeordnet ist. Mittels der zusätzlichen zweiten Skala kann sogar die Distanz eines unmittelbar in der Nähe des Messanschlags positionierten Objekts mit einer solch weitergebildeten Vorrichtung körperlich gemessen werden. Damit wird es in der Praxis vielen Handwerkern ermöglicht die gesuchten Distanzwerte mit einer einzigen derart weitergebildeten Vorrichtung zu bestimmen.

Eine erfindungsgemässe Vorrichtung kann auch - wie bei Rollmetern üblich - durch einen an einem Ende des Bauteils angeordneten Messhaken weitergebildet sein. Ebenso kann dem Messanschlag der Vorrichtung ein Schleppanschlag zugeordnet sein. Auch sind weitere Skalen (z.B. in cm und Inch), eine Rückzugeinrichtung, gegebenenfalls mit Arretiereinrichtung, für das Bauteil als Weiterbildungen denkbar.

Mit Vorteil wird das Bauteil im Wesentlichen vollständig in das Gehäuse einfahrbar sein und im ausgefahren Zustand über eine Kraft mit einem vorbestimmten Betrag haftreibend gehalten werden.

Eine Führung des Bauteils kann zudem derart ausgebildet sein, dass angesammelter Schmutz entfernbar ist. Gegebenenfalls ist die Vorrichtung derart ausgebildet, dass die Führung für Reinigungszwecke, beispielsweise über eine entfernbare Abdeckung, zugänglich ist. Auch könnte ein Austausch von Längenmesselementen vorgesehen sein.

In einer weiteren Ausführungsform der erfindungsgemässen Vorrichtung ist ein weiteres Bauteil vorgesehen. Die Vorrichtung kann dann z.B. mit zwei parallelen Bauteilen an bzw. in zwei parallelen Seitenflächen des Gehäuses ausgestattet sein. Vorzugsweise wird das weitere Bauteil aber orthogonal zum ersten Bauteil der erfindungsgemässen Vorrichtung angeordnet. Diese Ausführungsform stellt eine Vorrichtung zum handgehaltenen Messen von Distanzen mit noch flexibleren Eigenschaften bereit. Besonders gut geeignet sind orthogonale Bauteile z.B. für Vermessungen in Ecken, wie auch an Fenstern und Türen. Insbesondere können so zwei unterschiedliche Abstände parallel gemessen werden. Die Bauteile können dabei in das Gehäuse integriert sein, z.B. als Rollen oder teleskopartig ausziehbar. Eine andere Möglichkeit ist eine Integration der Bauteile in die Aussenwände des Gehäuses. Die Bauteile können aber auch einfach klappbar oder ausziehbar ausgebildet sein, z.B. als Gliedermassstäbe, und an den Aussenwänden des Gehäuses befestigt. So könnten die Bauteile beispielsweise als Massstäbe mit klapp- oder schiebbaren Gliedern mit einer Magnetschiene am innersten Glied ausgebildet sein und an Metallschienen in oder an den Gehäuseaussenwänden befestigbar.

Eine vorteilhafte Ausführungsform der Erfindung sieht ein oder mehrere Bauteile an der Vorrichtung vor, die beidseitig über das Gehäuse hinaus erstreckbar sind. So kann z.B. vermittels eines über die Rückseite des Gehäuses hinaus erstreckten Bauteils der Messanschlag der Vorrichtung nach hinten geschoben werden und mit der Vorrichtung beispielsweise von unzugänglichen Stellen aus gemessen werden.

Nachstehend wird die Erfindung anhand neun in den Figuren schematisch dargestellten Messanordnungen mit acht Ausführungsbeispielen erfindungsgemässer Vorrichtungen näher erläutert. Die Ausführungsbeispiele enthalten jeweils Merkmale in Kombination. Merkmale aus unterschiedlichen Ausführungsbeispielen lassen sich hier zu weiteren sinnvollen Kombinationen zusammenfassen. Gleiche Teile in unterschiedlichen Ausführungsbeispielen, welche dieselben Funktionen ausüben, sind mit gleichen Bezeichnungen und Bezugszeichen versehen. Es zeigen in schematischer Darstellung:
- Figur 1: eine erste Messanordnung zum optischen und körperlichen Messen einer Distanz zu einem Quader mit einem ersten Ausführungsbeispiel einer erfindungsgemässen Vorrichtung im teilweisen Schnitt in Draufsicht,
- Figur 2: die erste Messanordnung aus Figur 1 in Seitenansicht,
- Figur 3: eine zweite Messanordnung zum körperlichen Messen einer sehr kurzen Distanz zum Quader mit dem ersten Ausführungsbeispiel in Seitenansicht,
- Figur 4: eine dritte Messanordnung zum Messen einer Abmessung des Quaders mit dem ersten Ausführungsbeispiel im gewendeten Zustand in Seitenansicht,
- Figur 5: eine vierte Messanordnung zum körperlichen Messen einer kurzen Distanz zum Quader mit einem zweiten Ausführungsbeispiel einer erfindungsgemässen Vorrichtung im teilweisen Schnitt in Draufsicht,
- Figur 6: die zweite Messanordnung aus Figur 3 mit dem zweiten Ausführungsbeispiel in Draufsicht,
- Figur 7: eine fünfte Messanordnung mit dem Quader und einem Winkelstück sowie dem zweiten Ausführungsbeispiel in Draufsicht.
- Figur 8a: die vierte Messanordnung aus Figur 5 mit einem dritten Ausführungsbeispiel einer erfindungsgemässen Vorrichtung in Draufsicht.
- Figur 8b: schematisch einen Ausschnitt des Messstabes aus Figur 8a mit einer Lichtschranke.
- Figur 9: eine sechste Messanordnung mit einem vierten Ausführungsbeispiel mit einem weiteren Bauteil einer erfindungsgemässen Vorrichtung im teilweisen Schnitt in Draufsicht.
- Figur 10: eine siebte Messanordnung zum Messen der Tiefe einer Bohrung eines geschnitten dargestellten Würfels und einem fünften Ausführungsbeispiel einer erfindungsgemässen Vorrichtung in Seitenansicht,
- Figur 11: eine achte Messanordnung mit dem Winkelstück und einem sechsten Ausführungsbeispiel einer erfindungsgemässen Vorrichtung im teilweisen Schnitt in Draufsicht.
- Figur 12: eine neunte Messanordnung mit dem Würfel und einem siebten Ausführungsbeispiel im teilweisen Schnitt in Draufsicht.
- Figur 13: die neunte Messanordnung aus Figur 12 mit einem achten Ausführungsbeispiel im teilweisen Schnitt in Draufsicht.

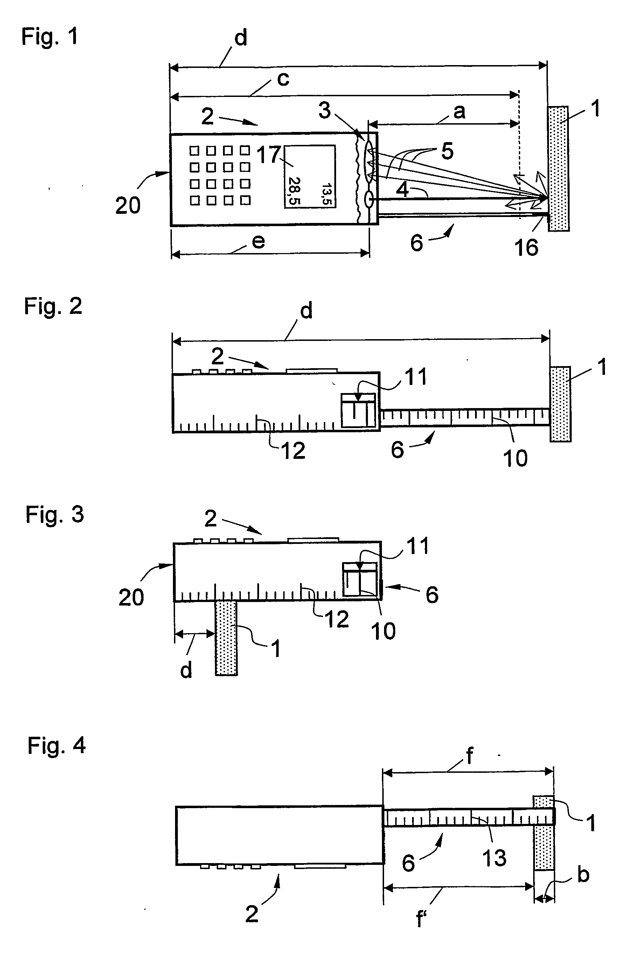

Figur 1 zeigt eine erste Messordnung zum optischen und körperlichen Messen der Distanz d zu einem Oberflächenbereich eines hier als Quader 1 ausgebildeten Objekts mit einem ersten Ausführungsbeispiel einer teilweise geschnitten dargestellten, handgehaltenen Vorrichtung gemäss der Erfindung in Draufsicht.

Die in den Figuren dargestellten Ausführungsbeispiele erfindungsgemässer Vorrichtungen, weisen jeweils ein Gehäuse 2 mit einer Länge von beispielsweise 15 Zentimetern auf. In eine Seite des Gehäuses 2 ist eine nur in den Figuren 1, 11, 12 und 13 im Schnitt dargestellte Optik 3 zum optischen Messen von Distanzen eingelassen. Die Optik 3 weist hier ein Sende- und ein dazu benachbart angeordnetes Empfangssegment auf. Das Sende- und das Empfangssegment sind jeweils Bestandteil eines Sende- bzw. Empfangskanals der Vorrichtung. Die der Seite mit der eingelassenen Optik 3 gegenüberliegende Rückseite 20 des Gehäuses 2 ist hier - wie bei derartigen Messgeräte üblich - als Messanschlag ausgebildet. Dieser verkörpert beim Messen von Distanzen d in der Regel deren Nullpunkt.

Wie aus Figur 1 ersichtlich werden zum optischen Messen von Distanzen d über den Sendekanal modulierte optische Sendestrahlen 4 gegen den Quader 1 ausgesendet. Die Erstreckung e des Gehäuses 2 zwischen der Optik 3 und der Rückseite 20 in Ausbreitungsrichtung der Sendestrahlen 4 entspricht bei den vorliegenden Ausführungsbeispielen nicht ganz der Länge des Gehäuses 2. Je nach Anordnung des Messanschlags am Gehäuse 2 könnte diese Ersteckung aber auch einen anderen Wert annehmen.

Der Quader 1 weist eine natürlich raue Oberfläche auf, von der optische Strahlen streuend reflektiert werden. Ein Teil der gestreut reflektierten Strahlen 5 wird von der Optik 3 eingesammelt, detektiert und in ein elektrisches Signal umgewandelt. Das Signal wird in an sich bekannter Weise zum Bestimmen des digitalen Werts der Distanz d von einer elektronischen Auswerteeinheit ausgewertet. Dabei wird die Erstreckung e zwischen der Optik 3 und der hier den Messanschlag bildenden Rückseite 20 berücksichtigt. Der durch die Auswertung digital bestimmte Wert der elektro-optischen Distanzmessung - von hier beispielsweise 28.5 Zentimetern - wird dann auf einer Anzeige 17 einem Benutzer der Ausführungsbeispiele zur Verfügung gestellt.

Aufgrund der optisch geometrischen Gegebenheiten des Sende- und Empfangskanals der Ausführungsbeispiele ist ein Detektieren ausgesendeter, an der Oberfläche des Quader 1 gestreut reflektierter Strahlen 5 erst möglich, wenn die Oberfläche wenigstens einen kritischen Abstand a von hier etwa 10 Zentimetern von der Optik 3 aufweist. Die Ausführungsbeispiele weisen damit eine in Figur 1 dargestellte, kritische Distanz c - zwischen der als Messanschlag dienenden Rückseite 20 und dem durch das Sendestrahlenbündel 4 ausgeleuchteten Bereich der Oberfläche des Quaders - von hier etwa 25 Zentimetern auf. Unterhalb der kritischen Distanz c ist ein optisches Messen nicht mehr möglich. Mit Messgeräten, die den Ausführungsbeispielen entsprechen, kann auf gestreut reflektierende Oberflächen oberhalb der kritischen Distanz c bis hin zu Distanzen d von typischerweise 30 Metern optisch gemessen werden.

Die in den Figuren dargestellten Ausführungsbeispiele weisen gemäss der Erfindung zusätzlich ein mit dem Gehäuse 2 verbundenes erstes Bauteil auf, welches zum Messen kurzer Distanzen und als Abstandshalter für die elektro-optische Messung ausgebildet ist. In den Fig. 1 bis 10 ist das Bauteil nur in seiner Funktion des körperlichen Messens einer Distanz d dargestellt, kann aber natürlich genauso als Abstandshalter für die elektro-optische Messung verwendet werden.

Beim ersten Ausführungsbeispiel der Figuren 1 bis 4 ist das Bauteil als Messband 6 ausgebildet. Das Messband 6 kann beispielsweise aus einem gewölbten, elastisch knickbarem Stahlband hergestellt sein. Auf der den Sendestrahlen 4 aus Figur 1 abgewandten Seite weist das Messband 6 eine nur in Figur 2 sichtbare erste Skala 10 sowie auf der den Sendestrahlen 4 zugewandten Seite eine nur in Figur 4 sichtbare dritte Skala 13 auf.

Das Messband 6 weist hier eine etwas kürzere Länge als das Gehäuse 2 auf. Das Messband 6 kann somit in einfacher Weise - auch ohne einen eigens dafür notwendigen Umlenk- oder Aufrollmechanismus - vollständig in das Gehäuse 2 eingefahren werden. Diese Länge des Messbands 6 ermöglicht somit nicht nur ein körperliches Messen von Distanzen d innerhalb des kritischen Abstands a zur Optik 3, sondern auch noch ein körperliches Messen in einem an die kritische Distanz anschliessenden Überlappbereich, in dem sowohl ein körperliches als auch ein optisches Messen der Distanz d möglich ist. Dadurch kann der Bedienkomfort gesteigert und in an sich bekannter Weise zusätzlich die Messsicherheit erhöht werden.

Das ausfahrbare Ende des Messbands 6 ist beim ersten Ausführungsbeispiel als Messhaken 16 ausgebildet. Das Ende könnte aber auch unmittelbar von der Stirnseite des Messbands 6 gebildet werden. Der Messhaken 16 ist hier - in an sich bekannter Weise - um dessen Materialstärke verschiebbar mit dem Messband 6 verbunden. Damit können Messungen entsprechend der dritten Messanordnung aus Figur 4 komfortabler durchgeführt werden.

Das Messband 6 wird beim ersten Ausführungsbeispiel von einer in den Figuren 1 bis 3 nicht sichtbaren, mit dem Gehäuse 2 integral ausgebildeten Führung geführt. Über beispielsweise einen auf das Bauteil drückenden Filz oder ein vorgespanntes Federelement, wird dadurch eine Reibkraft derart auf das Bauteil ausgeübt, dass einerseits ein Verstellen ohne grossen Kraftaufwand möglich ist und andererseits das Messband 6 im ausgefahrenen Zustand haftreibend gehalten wird.

Wie aus Figur 1 ersichtlich kann die Distanz d zur Oberfläche des Quaders 1 - alternativ zum optischen Messen - auch über das als Messband 6 ausgebildete Bauteil in Kombination mit dem Gehäuse 2 körperlich gemessen werden. Für das körperliche Messen von Distanzen d wird in einem ersten Schritt der Abstand zwischen dem durch das Sendestrahlenbündel 4 ausgeleuchteten Bereich der Oberfläche des Quaders 1 und der Optik 3 entlang der Ausbreitungsrichtung der Sendestrahlen 4 mit Hilfe des Messbandes 6 gemessen. Zu diesem Zweck wird ein Ende des Messbandes 6 über das Gehäuse 2 hinaus im Wesentlichen parallel zu den Sendestrahlen 4 an den Quader 1 herangeführt. Zum Messen von Distanzen d zwischen der als Messanschlag dienenden Rückseite 20 und der Oberfläche des Quaders 1 wird in der ersten Messanordnung das Ende des Messbandes 6 gegen die Oberfläche des Quaders 1 gestossen und dann die Relativposition zwischen dem Messband 6 und dem Gehäuse 2 automatisch erfasst. Die Erfassung der Relativposition erfolgt über einen Reflextaster im Gehäuse 2, der die in Figur 2 dargestellte erste Skala 10 abtastet. Die Erfassung kann auch über eine Abtastung der in Figur 4 gezeigten dritten Skala 13 erfolgen. Unter Berücksichtigung der Erstreckung e des Gehäuses 2 in Richtung der Sendestrahlen 4 von der Optik 3 bis hin zur Rückseite 20 wird in einem zweiten Schritt dann die Distanz d zwischen dem Messanschlag und der Oberfläche des Quader 1 bestimmt und als digitaler Wert ausgegeben.

Mit Hilfe des als Messband 6 ausgebildeten Bauteils können mit einer erfindungsgemässen Vorrichtung Distanzen d insbesondere in einem Bereich zwischen der Länge des Gehäuses 2 und der für ein optisches Messen kritischen Distanz c auf einfache Art und Weise körperlich gemessen, automatisch erfasst, und als digitale Werte ausgegeben werden.

Das erste Ausführungsbeispiel weist einen Reflextaster als elektronische Einrichtung zum Erfassen der Relativposition zwischen hier dem Messband 6 und dem Gehäuse 2 auf. Die elektronische Einrichtung ist über eine Taste am Gehäuse aktivierbar. Damit kann - wie auch beim optischen Messen - ein digitaler Wert für die Distanz d bestimmt und auf der Anzeige 17 angezeigt werden. Der digital vorliegende Wert kann zudem mit Vorteil - wie bei optisch gemessenen Distanz heute üblich - vom Gerät gespeichert, weiterverarbeitet oder übertragen werden.

Auch kann der digitale Wert problemlos in ein anderes Bezugssystem - beispielsweise mit der der Rückseite 20 gegenüberliegenden Frontseite des Gehäuses 2 als Nullpunkt - transformiert werden. Der auf der Anzeige 17 etwas kleiner dargestellte Wert - von hier beispielsweise 13.5 Zentimetern - entspricht damit dem Abstand zwischen der Oberfläche des Quaders 1 und der Frontseite des Gehäuses 2.

Zusätzlich kann - wie aus Figur 2 ersichtlich - die körperlich gemessene Distanz d über eine beispielsweise auf dem Gehäuse 2 angeordnete erste Ablesemarke 11 auf einer auf dem Messband 6 angeordneten ersten Skala 10 direkt von einem Benutzer abgelesen werden.

Figur 2 zeigt die Messanordnung aus Figur 1 in Seitenansicht. In einer zum Messband 6 parallelen Seitenfläche des Gehäuses 2 ist ein vergrösserndes Ablesefenster mit der ersten Ablesemarke 11 eingelassen. Die erste Skala 10 ist derart gestaltet, dass bei der ersten Ablesemarke 11 der Wert für die körperlich gemessene Distanz d - von hier 28,5 Zentimetern - vom Benutzer direkt abgelesen werden kann.

Auch wäre ein alternatives Ausführungsbeispiel ohne Ablesefenster denkbar. Der Wert der gemessenen Distanz d zum Quader 1 könnte beispielsweise auch über die Frontseite als alternative erste Ablesemarke auf einer alternativen ersten Skala direkt abgelesen werden. Die alternative erste Skala wäre dann gegenüber der ersten Skala 10 etwas verschoben auf dem Messband 6 angeordnet.

Durch eine derartige Ausbildung der erfindungsgemässen Vorrichtung wird es dem Benutzer ermöglicht, körperlich gemessene Distanzen d am Messband 6 bzw. an der Ablesemarke 11 abzulesen, ohne automatisch einen digitalen Distanzwert zu erhalten. Dem Benutzer bleibt es überlassen, die elektronische Einrichtung zur automatischen Erfassung der Position des Messbandes 6 zu aktivieren, oder den Wert - z.B. zur nachträglichen Überprüfung - einfach nur abzulesen.

Figur 3 zeigt eine zweite Messanordnung zum körperlichen Messen einer sehr kurzen Distanz d zum Quader 1 mit dem ersten Ausführungsbeispiel in Seitenansicht.

Auf einer parallel zum Messband 6 ausgerichteten Seitenfläche des Gehäuses 2 ist zum Messen sehr kurzer Distanzen d entlang einer Kante des Gehäuses 2 eine zweite Skala 12 angeordnet. Mit Hilfe der zweiten Skala 12 können sogar Distanzen d, die kleiner als die Länge des Gehäuses 2 sind, gemessen werden. Durch die Rückseite 20 wird ebenfalls der Nullpunkt auf der Skala 12 ablesbarer Distanzen verkörpert. Durch die zweite Skala 12, die erste Ablesemarke 11 und die erste Skala 10 ist es über das Gehäuse 2 bzw. das Messband 6 möglich, im Prinzip jede Distanz d unterhalb der kritischen Distanz c aus Figur 1 mit dem ersten Ausführungsbeispiel körperlich zu messen.

Figur 4 zeigt eine dritte Messanordnung in Seitenansicht, bei der mit dem ersten Ausführungsbeispiel im gewendeten Zustand eine Abmessung b des Quader 1 gemessen wird. Die dritte Skala 13 ist auf der den Sendestrahlen 4 aus Figur 1 zugewandten Seite des Messbandes 6 angeordnet. Im Gegensatz zu der auf der gegenüberliegenden Seite angeordneten ersten Skala 10 aus Figur 2 wird hier der Nullpunkt der dritten Skala 13 durch das ausfahrbare Ende des Messbands 6 verkörpert. Mittels der dritten Skala 13 können bei ausgefahrenem Messband 6 auch kleine Abmessungen eines Objekts oder relativ kleine Abstände zwischen Objekten auf einfache und komfortable Weise gemessen werden.

Über die Frontseite des Gehäuses 2 als Ablesemarke ist es zudem möglich, den Abstand f zwischen dem ausgefahrenen Ende des Messbands 6 und dem Gehäuse 2 direkt auf der dritten Skala 13 abzulesen. Bei Aktivierung einer automatischen Abtast-Einrichtung zur Abtastung der dritten Skala 13 wird der Wert für den Abstand f digital ausgegeben. Um beide Skalen 10,13 des Messbands 6 automatisch abzulesen sind zwei Abtast-Einrichtungen im Gehäuse vorzusehen. Eine andere Möglichkeit ist, die Skalen 10,13 identisch auszubilden und eine einzige Abtast-Einrichtung vorzusehen.

Zusätzlich zur Bestimmung von Abmessung b des Quaders 1 und Abstand f zum Gehäuse mit dem Messband 6 kann der Abstand f' zum Quader 1 elektro-optisch gemessen werden.

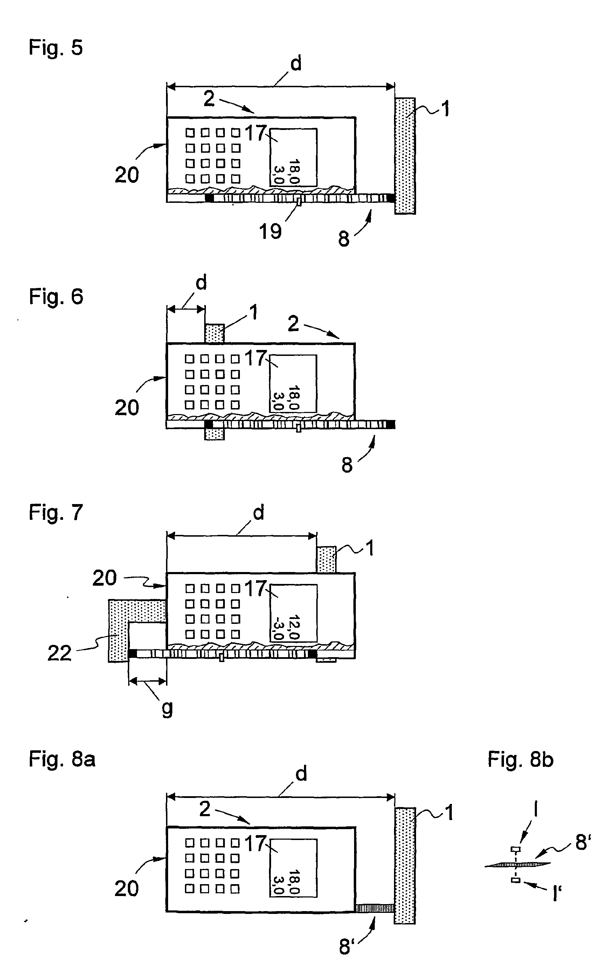

Figur 5 zeigt eine vierte Messanordnung mit dem Quader 1 und einem teilweise geschnitten dargestellten zweiten Ausführungsbeispiel einer erfindungsgemässen Vorrichtung.

Das zweite Ausführungsbeispiel ist in den Figuren 5, 6 und 7 in Draufsicht derart im teilweisen Schnitt dargestellt, dass ein als Messstab 8 ausgebildetes Bauteil sowie dessen mit dem Gehäuse 2 integral ausgebildete Führung sichtbar sind.

Der Messstab 8 ist hier mit einem Betätigungshebel 19 versehen. Im Gegensatz zum ersten Ausführungsbeispiel weist das zweite Ausführungsbeispiel keine Skalen auf, über die ein Benutzer direkt Distanzen, Abstände oder Abmessungen von Objekten ablesen kann. Über einen auf der Oberfläche des Messstab 8 aufgebrachten Strichcode wird hier die Relativposition des Messstabs 8 zum Gehäuse 2 elektrooptisch erfasst, unter Berücksichtigung der Länge des Gehäuses 2 die Distanz d bestimmt und diese auf der Anzeige 17 wiedergegeben. Der Messstab 8 weist mit Vorteil dieselbe Länge wie das Gehäuse 2 auf.

Der Messstab 8 wird am besten in der Nähe einer Bodenkante des Gehäuses 2 geführt, die - wie in den Figuren 5, 6 und 7 gezeigt - zu den Sendestrahlen 4 aus Figur 1 benachbart ist. Im Gegensatz zum ersten Ausführungsbeispiel ist hier der Messstab 8 beidseitig über das Gehäuse 2 hinaus erstreckbar. Mit Vorteil ist das Gehäuse 2 im Bereich der Führung transparent ausgebildet, so dass beide Enden des Messstabs 8 für Messzwecke einsehbar sind. Auch weist die Führung einen hier nicht sichtbaren Schlitz für den Betätigungshebel 19 auf.

In der vierten Messanordnung von Figur 5 wird mit dem zweiten Ausführungsbeispiel die Distanz d zwischen der Rückseite 20 des Gehäuses 2 und der Oberfläche des Quaders 1 wie bei der ersten Messanordnung körperlichen gemessen. Dafür wird das frontseitige Ende des Messstabs 8 über eine Relativbewegung zum Gehäuse 2 an die Oberfläche des Quaders 1 herangeführt, die Relativposition automatisch erfasst und die dem frontseitigen Ende des Bauteils entsprechende Distanz - von hier 18 Zentimetern - auf der Anzeige 17 wiedergegeben.

Figur 6 zeigt die zweite Messanordnung aus Figur 3 mit dem Quader 1 und dem teilweise geschnittenen dargestellten zweiten Ausführungsbeispiel in Draufsicht zur Bestimmung des digitalen Werts der sehr kurzen Distanz d von der Rückseite 20 des Gehäuses 2 bis zur Oberfläche des Quaders 1.

Für diesen Zweck wird - wie in Figur 6 gezeigt - das rückseitige Ende des Messstabs 8 über der zu messenden Oberfläche des Quaders 1 positioniert, die Relativposition automatisch erfasst und die dem rückseitigen Ende entsprechende Distanz d - von hier 3 Zentimetern - auf der Anzeige 17 wiedergegeben.

Figur 7 zeigt eine fünfte Messanordnung mit dem Quader 1 und einem Winkelstück 22 sowie dem teilweise geschnittenen zweiten Ausführungsbeispiel in Draufsicht.

Mit dem zweiten Ausführungsbeispiel kann die Distanz d von der Rückseite 20 des Gehäuses 2 zur Oberfläche des Quaders 1 bestimmt werden, indem der Messstab 8 soweit über die Rückseite 20 hinaus bewegt wird, bis das frontseitiges Ende des Messstabs 8 über der zu messenden Oberfläche zu liegen kommt. Nun kann die Messung ausgelöst und sowohl die dem frontseitigen Ende als auch die dem rückseitigen Ende entsprechenden Distanzen - von hier beispielsweise 12 bzw. - 3 Zentimetern - auf der Anzeige 17 wiedergegeben werden.

Wie aus Figur 7 ebenfalls ersichtlich kann zudem über das rückseitige Ende des Messstabs 8, welches sich hier über die Rückseite 20 erstreckt, auch die Abmessung g des Absatzes des Winkelstücks 22 auf digitale Art und Weise bestimmt werden.

Fig. 8a zeigt die vierte Messanordnung von Fig. 5 mit einem dritten Ausführungsbeispiel einer erfindungsgemässen Vorrichtung. Ein Messstab 8' weist hier weder eine Skala noch einen Code auf, sondern ein Muster aus abwechselnd lichtundurchlässigen und lichtdurchlässigen Strichen. In Fig. 8b schematisch dargestellt ist ein Ausschnitt des Messstabes 8' mit einer Lichtschranke mit Emitter 1 und Detektor 1'. Ein vom Emitter 1 emittierter und vom Detektor 1' detektierter Laserstrahl ist mit einer gestrichelten Linie gezeigt. Der Messstab 8' und die Lichtschranke sind in Fig. 8a im Gehäuse 2 angeordnet. Der Messstab 8' wird automatisch aus dem Gehäuse 2 ausgefahren, dabei werden vermittels der Lichtschranke in bekannter Art und Weise die Hell-Dunkel Wechsel bzw. die Striche gezählt. Aus den gezählten Strichen wird die mit dem Messstab 8' körperlich gemessene Distanz als digitaler Wert ermittelt. Die Distanz d vom Messanschlag der Vorrichtung zur Oberfläche des Quaders 1 wird digital angezeigt. Dabei kann für die Ausgabe oder Anzeige des Distanzwerts zwischen dem Messanschlag Gehäuse-Rückseite 20 oder Gehäuse-Frontseite gewählt werden. Der von der Gehäuse-Rückseite 20 bzw.

Gehäuse-Frontseite als Messanschlag gemessene Wert entspricht hier dem angezeigten Distanzwert von achtzehn bzw. drei Zentimetern.

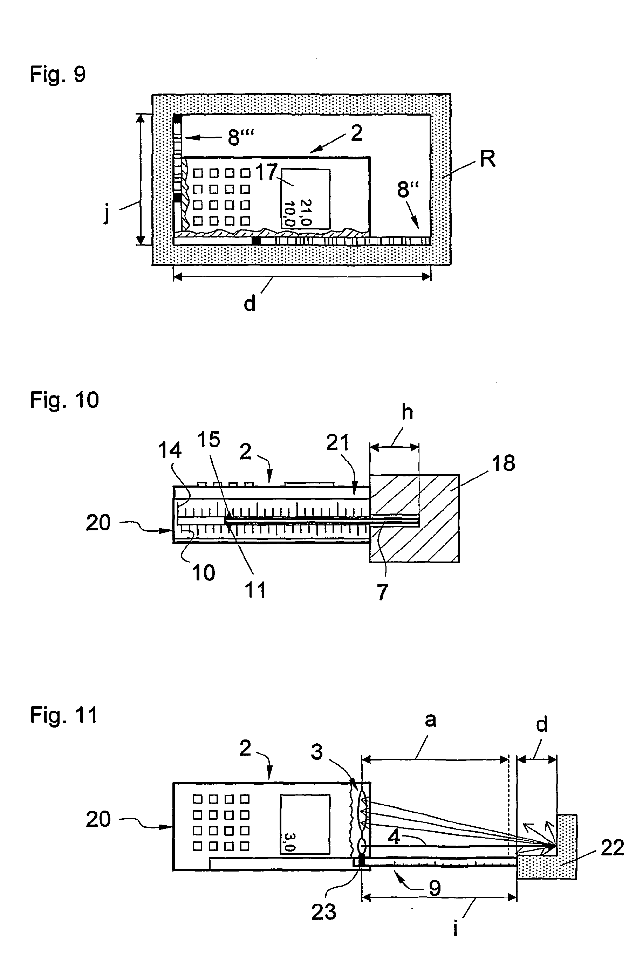

In Figur 9 ist eine sechste Messanordnung zur Vermessung eines Rahmens R mit einem vierten Ausführungsbeispiel einer erfindungsgemässen Vorrichtung in Draufsicht derart im teilweisen Schnitt dargestellt, dass zwei als Messstäbe 8",8"' ausgebildete Bauteile sowie deren mit dem Gehäuse 2 integral ausgebildete Führungen sichtbar sind. Dem handgehaltenen Distanzmessgerät ist hier zum ersten als Messstab 8" ausgebildeten Bauteil ein weiteres oder zweites als Messstab 8"' ausgebildetes Bauteil zugeordnet. Die Messstäbe 8",8"' sind in mit dem Gehäuse 2 integral ausgebildeten transparenten Führungen geführt und automatisch ausfahrbar. Die Führungen bzw. die Messstäbe 8", 8"' sind orthogonal leicht untereinander versetzt angeordnet. Bei kürzer als die Länge bzw. Breite des Gehäuses ausgebildeten Bauteilen, könnte die orthogonale Anordnung auch in einer Ebene erfolgen. Die Messstäbe 8",8"' sind hier mit Codes versehen, welche magnetisch abgetastet werden. Dazu sind zwei Abtast-Einrichtungen im Gehäuse 2 angeordnet. Die digital angezeigten Messwerte von einundzwanzig und zehn Zentimetern entsprechen den Distanzwerten d,j von der Gehäuse-Rückseite und Gehäuse-Seitenkante als jeweiligem Messanschlag. Die orthogonale Anordnung eines weiteren als Messstab 8"' ausgebildeten Bauteils zu einem ersten als Messstab 8" ausgebildeten Bauteil einer erfindungsgemässen Vorrichtung ist besonders für Vermessungen von Innenmassen von Rahmenteilen, wie Fenster und Türen, geeignet. Vorzugsweise sind beide Bauteile beidseitig aus dem Gehäuse ausfahrbar.

Figur 10 zeigt eine siebte Messanordnung beispielsweise zum Messen der Tiefe h einer Bohrung eines im Schnitt dargestellten Würfels 18 mit einem fünften Ausführungsbeispiel einer erfindungsgemässen Vorrichtung in Seitenansicht.

Das fünfte Ausführungsbeispiel weist ein Gehäuse 2 mit einer in Figur 10 nicht sichtbaren Aufnahme und einem Längenmessmodul 21, in dem ein als Messdorn 7 ausgebildetes Bauteil geführt ist. Über die Aufnahme ist das Längenmessmodul 21 mit dem Gehäuse 2 abnehmbar verbunden. Der Messdorn 7 ist hier als stabförmiger, im Wesentlichen starrer Körper ausgebildet, der beispielsweise aus Kunststoff hergestellt sein könnte.

Im Gegensatz zum ersten Ausführungsbeispiel ist hier die erste Skala 10 - zum Ablesen der körperlichen gemessenen Distanz d aus Figur 1 - nicht am Messdorn 7, sondern hier am Längenmessmodul 21 angeordnet. Zudem ist am Längenmessmodul 21 auch eine vierte Skala 14 angeordnet, deren Nullpunkt hier durch die der Rückseite 20 gegenüberliegende Frontseite verkörpert wird. Die erste und eine vierte Ablesemarke 11 bzw. 15 sind hier am rückseitigen Ende des Messdorns 7 angeordnet.

Zum Bestimmen der Tiefe g der Bohrung wird die Frontseite des Gehäuses 2 an den Würfel 18 angelegt und der Messdorn 7 an den Grund der Bohrung gestossen. Über die vierte Ablesemarke 15 kann auf der vierten Skala 14 die Tiefe h der Bohrung abgelesen werden.

Die abnehmbare Verbindung des Längenmessmoduls 21 mit der Aufnahme des Gehäuses 2 ist derart ausgebildet sein, dass im verbundenen Zustand die erste und die vierte Skala 10 bzw. 14 eine vorgegebene Position relativ zur Front- bzw. Rückseite 20 aufweisen. Dies kann in an sich bekannter Weise beispielsweise über Positionierelemente erfolgen.

Eine modulartige Ausbildung des Bauteils und dessen Führung hat den Vorteil, dass handgehaltene Vorrichtungen, die zum Messen kurzer Distanzen nachrüstbar sind, ermöglicht werden.

In den Figuren 1 bis 10 ist die erfindungsgemässe Vorrichtung mit einem ersten, in verschiedenen Ausführungen dargestellten Bauteil versehen, welches Bauteil nur in seiner Funktion als Distanzmessmittel gezeigt wird. In den Figuren 11 bis 13 werden nun Messanordnungen erörtert, in denen das erste Bauteil als Abstandshalter eingesetzt wird. Es versteht sich jedoch, dass auch das in den Figuren 1 bis 10 gezeigte erste Bauteil der erfindungsgemässen Vorrichtung in seinen unterschiedlichen Ausführungen jeweils als Abstandshalter einsetzbar ist.

Figur 11 zeigt eine achte Messanordnung mit dem Winkelstück 22 und einem teilweise geschnitten dargestellten sechsten Ausführungsbeispiel einer erfindungsgemässen Vorrichtung in Draufsicht.

Das sechste Ausführungsbeispiel weist ein als Abstandshalter 9 ausgebildetes Bauteil auf. Der Abstandshalter 9 ist hier über einen Bolzen 23 mit dem Gehäuse 2 ausklappbar verbunden.

Beim herkömmlichen optischen Messen von Distanzen zwischen der den Messanschlag bildenden Rückseite 20 des Gehäuses 2 und ausreichend beabstandeten Objekten befindet sich der Abstandshalter 9 im eingeklappten Zustand im Gehäuse 2 versenkt. Hingegen wird beim Messen von kurzen und sehr kurzen Distanzen d der Abstandshalter 9 ausgeklappt und erstreckt sich damit - in Ausbreitungsrichtung der Sendestrahlen 4 - in einer fest vorbestimmten Länge i ausgehend von der Optik 3 über das Gehäuse 2 hinaus.

Bei den ersten fünf Ausführungsbeispielen werden kurze und sehr kurze Distanzen d körperlich gemessen, indem das Bauteil über eine Relativbewegung zum Gehäuse 2 mit einem Ende an die zu messende Oberfläche herangeführt wird. Alternativ dazu wird beim sechsten Ausführungsbeispiel hingegen der Abstandshalter 9 ausgeklappt. Als Messanschlag dient nun nicht mehr die Rückseite 20 des Gehäuses 2, sondern das ausgeklappte Ende des Abstandshalters 9.

Wird - wie in Figur 11 dargestellt - die fest vorbestimmte Länge i zumindest so gross gewählt wie der kritische Abstand a, so wird dadurch das Einhalten des kritischen Abstands a gewährleistet, wodurch auch sehr kurze Distanzen optisch gemessen werden können. Die Messwerte liegen damit auch ohne eine separate Einrichtung zum Erfassen der Relativposition zwischen dem Bauteil und dem Gehäuse 2 in digitaler Form vor.

Das Ausführungsbeispiel weist mit Vorteil eine in Figur 11 nicht sichtbare Einrichtung zum Registrieren des vorbestimmt erstreckten Zustands des Abstandshalters 9 - z. B. einen einfachen mechanischen Schalter - auf. Registriert die erfindungsgemässe Vorrichtung, dass der Abstandshalter 9 sich ausgeklappt im vorbestimmt erstreckten Zustand befindet, so wird bei der Bestimmung der Distanz d das frontseitige Ende des Abstandshalters 9 als Nullpunkt der angezeigten Distanz d - von hier beispielsweise drei Zentimetern - automatisch berücksichtigt. Beim herkömmlichen optischen Messen mit eingeklapptem Abstandshalter 9 kann hingegen mit Hilfe der Einrichtung zum Registrieren automatisch die Rückseite 20 als Messanschlag und Nullpunkt der gemessenen Distanz berücksichtigt werden. Auf diese Weise können irrtümliche Zuordnungen der beiden unterschiedlichen Messanschläge zu den jeweiligen Arten von Distanzmessungen verhindert werden.

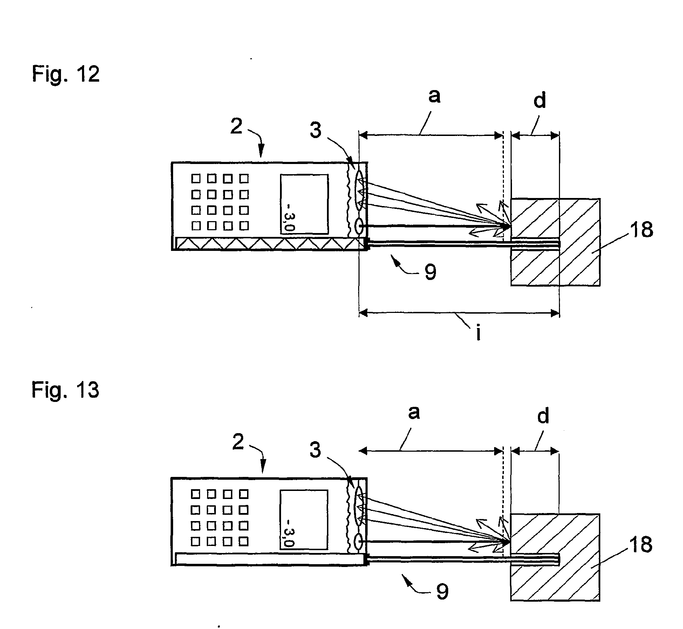

Figur 12 zeigt eine neunte Messanordnung mit dem Würfel 18 aus Figur 10 und mit einem teilweise geschnitten dargestellten siebten Ausführungsbeispiel in Draufsicht.

Im Gegensatz zum sechsten Ausführungsbeispiel ist der Abstandhalter 9 nicht ausklappbar, sondern ausfahrbar mit dem Gehäuse 2 verbunden. Im ausgefahrenen Zustand wird der hier dornartig ausgebildete Abstandshalter 9 über eine nur schematisch angedeutete Feder gegen einen Anschlag des Gehäuses 2 gedrückt und erstreckt sich so in einer vorbestimmten Länge i über das Gehäuse 2 hinaus. Das fünfte Ausführungsbeispiel ist mit Vorteil ebenfalls mit einer nicht sichtbaren Einrichtung zum Registrieren des bis zum Anschlag ausgefahren Abstandshalters 9 versehen.

Die Länge i des Abstandshalters ist hier grösser als beim sechsten Ausführungsbeispiel aus Figur 11, wodurch sich ein grösserer Messbereich ergibt, in dem dieser Messanordnung vergleichbare Messungen durchgeführt werden können.

Figur 13 zeigt die neunte Messanordnung aus Figur 12 mit einem teilweise geschnitten dargestellten achten Ausführungsbeispiel in Draufsicht. Der Abstandshalter 9 wird automatisch bis zu einem Messpunkt ausgefahren und in dieser Position gehalten. Ein Sensor registriert die ausgefahrene Position des Bauteils, indem er eine in Figur 13 nicht sichtbare Skala auf dem Bauteil abtastet. Das ausgefahrene Ende des Bauteils gilt dann als Messanschlag für die optische Distanzmessung.

## Patentansprüche

1. Vorrichtung zum handgehaltenen Messen von Distanzen (d) zu einem Oberflächenbereich eines Objekts (1, 18, 22) mit
- einem Gehäuse (2),
- einer in das Gehäuse (2) eingelassenen Optik (3) für modulierte Sendestrahlen (4) und für am Oberflächenbereich reflektierte Strahlen (5) der Sendestrahlen (4), zur elektro-optischen Distanzmessung, und
- einem mit dem Gehäuse (2) verbundenen ersten Bauteil (6, 7, 8, 8', 8", 9), das zur Körperlichen Bestimmung kurzer Distanzen (d) in Ausbreitungsrichtung der Sendestrahlen (4) über das Gehäuse (2) hinaus erstreckbar ist,
**dadurch gekennzeichnet, dass**
- das erste Bauteil (6, 7, 8, 8', 8'', 9) sowohl zum Körperlichen Messen kurzer Distanzen, insbesondere zwischen einem durch einen Messanschlag (20) des Gehäuses (2) gegebenen Nullpunkt und dem Oberflächenbereich, als auch als Abstandshalter für die elektro-optische Distanzmessung ausgebildet ist und
- Mittel zum automatischen Erfassen einer von der Erstreckung des ersten Bauteils (6, 7 8, 8', 8", 9) abhängigen Distanz sowohl zur Körperlichen Distanzmessung, als auch zur Festlegung des Nullpunkts für die elektro-optische Messung, vorgesehen sind.

2. Vorrichtung nach Anspruch 1, **dadurch gekennzeichnet, dass** die Mittel zum automatischen Erfassen
- optische, oder
- magnetische, oder
- akustische, oder
- berührungs- oder druckempfindliche Sensoren umfassen.

3. Vorrichtung nach Anspruch 1 oder 2, **dadurch gekennzeichnet, dass** die Vorrichtung wenigstens ein weiteres, gegebenenfalls orthogonal zum ersten Bauteil (8") angeordnetes, Bauteil (8"') zum Körperlichen Messen kurzer Distanzen aufweist.

4. Vorrichtung nach Anspruch 3, **dadurch gekennzeichnet, dass** dem weiteren Bauteil (8"') eine Einrichtung, wie ein optischer, magnetischer, akustischer, oder berührungs- oder druckempfindlicher Sensor, zum automatischen Erfassen der kurzen Distanz zugeordnet ist.

5. Vorrichtung nach einem der vorangehenden Ansprüche, **dadurch gekennzeichnet, dass**
- sich das erste Bauteil (9) zum elektro-optischen Messen kurzer Distanzen (d) in einer fest vorbestimmten Länge (i) über das Gehäuse (2) hinaus erstreckt, und dass
- im vorbestimmt erstreckten Zustand des ersten Bauteils (9) der Nullpunkt der gemessenen, kurzen Distanzen (d) durch das dem Gehäuse (2) abgewandte Ende des ersten Bauteils (9) verkörpert wird.

6. Vorrichtung nach Anspruch 5, **dadurch gekennzeichnet, dass** eine Einrichtung zum Registrieren des vorbestimmt erstreckten Zustands des ersten Bauteils (9) vorgesehen ist.

7. Vorrichtung nach Anspruch 5 oder 6, **dadurch gekennzeichnet, dass** das erste Bauteil (9), gegebenenfalls einrastend, in den vorbestimmt erstreckten Zustand ausklapp- oder ausfahrbar ist.

8. Vorrichtung nach einem der Ansprüche 3 bis 7, **dadurch gekennzeichnet, dass** dem ersten und/oder weiteren Bauteil (6, 7, 8, 8', 8", 8"', 9)
- eine Skala oder
- ein Code
zugeordnet ist.

9. Vorrichtung nach einem der Ansprüche 3 bis 8, **dadurch gekennzeichnet, dass** das erste und/oder weitere Bauteil als eine der folgenden Alternativen ausgeführt ist:
- elastisch deformierbar, bandförmig,
- als länglicher, im Wesentlichen starrer Körper
- in einem, insbesondere über eine Aufnahme, am Gehäuse (2) abnehmbar befestigten Längenmessmodul angeordnet.

10. Vorrichtung nach einem der Ansprüche 3 bis 9, **dadurch gekennzeichnet, dass** die Führung des ersten und/oder weiteren Bauteils (6, 7, 8, 8', 8", 8"', 9) derart ausgebildet ist, dass es in ausgefahrener Stellung haftreibend gehalten wird.

11. Vorrichtung nach einem der Ansprüche 3 bis 10, **dadurch gekennzeichnet, dass** das abgewandte Ende des ersten und/oder weiteren Bauteils (7, 8) als Messhaken (16) ausgebildet ist, der gegebenenfalls um die Materialstärke des Messhakens (16) verschiebbar ist.

12. Vorrichtung nach einem der Ansprüche 1 bis 11, **dadurch gekennzeichnet, dass** auf dem ersten Bauteil (6, 7, 9) eine dritte Skala (13) angeordnet ist, deren Nullpunkt durch die dem Gehäuse abgewandte Seite des Bauteils (6, 7, 9) verkörpert wird.

13. Vorrichtung nach einem der Ansprüche 1 bis 12, **dadurch gekennzeichnet, dass** am Gehäuse (2) wenigstens eine zweite Skala (12) zum Messen von Distanzen angeordnet ist, deren Nullpunkt durch den Messanschlag (20) verkörpert wird.

## Claims

1. Hand-held device for measuring distances (d) to a surface region of an object (1, 18, 22), comprising
- a housing (2),
- an optical system (3) inserted into the housing (2) and intended for modulated transmitted beams (4) and for those beams (5) of the transmitted beams (4) which are reflected by the surface region, for electro-optical distance measurement, and
- a first component (6, 7, 8, 8', 8", 9) which is connected to the housing (2) and can be extended beyond the housing (2) for the physical determination of short distances (d) in the direction of propagation of the transmitted beams (4),
**characterized in that**
- the first component (6, 7, 8, 8', 8", 9) is formed both for the physical measurement of short distances, in particular between a zero point provided by a measuring stop (20) of the housing (2) and the surface region, and as a spacer for the electro-optical distance measurement and
- means for automatically determining a distance dependent on the extension of the first component (6, 7, 8, 8', 8", 9) are provided both for the physical distance measurement and for establishing the zero point for the electro-optical measurement.

2. Device according to Claim 1, **characterized in that** the means for automatic determination comprise
- optical or
- magnetic or
- acoustic or
- contact- or pressure-sensitive sensors.

3. Device according to Claim 1 or 2, **characterized in that** the device has at least one further component (8"'), optionally arranged orthogonally to the first component (8"), for the physical measurement of short distances.

4. Device according to Claim 3, **characterized in that** a facility, such as an optical, magnetic, acoustic or contact- or pressure-sensitive sensor, for automatic determination of the short distance is coordinated with the further component (8"').

5. Device according to any of the preceding Claims, **characterized in that**
- the first component (9) for the electro-optical measurement of short distances (d) extends a fixed pre-determined length (i) beyond the housing (2), and **in that**
- **in that** state of the first component (9) in which it is extended by the pre-determined amount, the zero point of the measured, short distances (d) is embodied by that end of the first component (9) which faces away from the housing (2).

6. Device according to Claim 5, **characterized in that** a facility for registering that state of the first component (9) in which it is extended by a pre-determined amount is provided.

7. Device according to Claim 5 or 6, **characterized in that** the first component (9) can be unfolded or extended, optionally with locking, to the state in which it is extended by the pre-determined amount.

8. Device according to any of Claims 3 to 7, **characterized in that**
- a scale or
- a code
is coordinated with the first and/or further component (6, 7, 8, 8', 8", 8"', 9).

9. Device according to any of Claims 3 to 8, **characterized in that** the first and/or further component is in the form of one of the following alternatives:
- elastically deformable, tape-like,
- in the form of an elongated, substantially rigid body,
- arranged in a length-measuring module removably fixed to the housing (2), in particular via a receptacle.

10. Device according to any of Claims 3 to 9, **characterized in that** the guide of the first and/or further component (6, 7, 8, 8', 8", 8"', 9) is formed in such a way that it is held with frictional contact in the extended position.

11. Device according to any of Claims 3 to 10, **characterized in that** the opposite end of the first and/or second component (7, 8) is in the form of a measuring hook (16) which is optionally displaceable by the material thickness of the measuring hook (16).

12. Device according to any of Claims 1 to 11, **characterized in that** a third scale (13), the zero point of which is embodied by that side of the component (6, 7, 9) which faces away from the housing, is arranged on the first component (6, 7, 9).

13. Device according to any of Claims 1 to 12, **characterized in that** at least one second scale (12) for measuring distances is arranged on the housing (2), the zero point of which scale is embodied by the measuring stop (20).

## Revendications

1. Dispositif pour la mesure, tenu à la main, de distances (d) par rapport à une zone de surface d'un objet (1, 18, 22), comprenant
- un boîtier (2),
- une optique (3) montée dans le boîtier (2), pour des rayons d'émission (4) modulés et pour des rayons (5), réfléchis sur la zone de surface, des rayons d'émission (4), pour la mesure de distance par voie électro-optique, et
- un premier composant (6, 7, 8, 8', 8", 9) relié au boîtier (2), qui est susceptible de s'étendre sur le boîtier (2), dans la direction de propagation des rayons d'émission (4), pour la détermination corporelle de courtes distances (d),
**caractérisé en ce que**
- le premier composant (6, 7, 8, 8', 8", 9) est réalisé, tant pour la mesure corporelle de courtes distances, en particulier entre un point zéro, fourni par une butée de mesure (20) du boîtier (2), et la zone de surface, qu'également en tant que support d'espacement pour la mesure de distance par voie électro-optique, et
- des moyens de détection automatique d'une distance, dépendant de l'étendue du premier composant (6, 7, 8, 8', 8", 9), étant prévus, tant pour la mesure de distance corporelle, qu'également pour la fixation du point zéro pour la mesure électro-optique.

2. Dispositif selon la revendication 1, **caractérisé en ce que** les moyens de détection automatique comprennent des capteurs
- optiques, ou
- magnétiques, ou
- acoustiques, ou
- sensibles au contact ou à la pression.

3. Dispositif selon la revendication 1 ou 2, **caractérisé en ce que** le dispositif comprend un autre composant (8"') pour la mesure corporelle de courtes distances, disposé le cas échéant perpendiculairement par rapport au premier composant (8").

4. Dispositif selon la revendication 3, **caractérisé en ce qu'**à l'autre composant (8"') est associé un dispositif, tel qu'un capteur optique, magnétique, acoustique ou sensible au contact ou à la pression, pour la détection automatique des courtes distances.

5. Dispositif selon l'une des revendications précédentes, **caractérisé en ce que**
- le premier composant (9) pour la mesure électro-optique de courtes distances (d) s'étend sur une longueur (i) prédéterminée fixe sur le boîtier (2), et **en ce que**
- à l'état étiré de façon prédéterminée du premier composant (9), le point zéro des courtes distances (d) mesurées est matérialisé par l'extrémité, opposée au boîtier (2), du premier composant (9).

6. Dispositif selon la revendication 5, **caractérisé en ce qu'**un dispositif de repérage de l'état étiré de façon prédéterminée du premier composant (9) est prévu.

7. Dispositif selon la revendication 5 ou 6, **caractérisé en ce que** le premier composant (9) est susceptible d'être sorti, par rabattement ou par déploiement, à l'état étiré de façon prédéterminée, le cas échéant avec encliquetage.

8. Dispositif selon l'une des revendications 3 à 7, **caractérisé en ce qu'**
- une échelle, ou
- un code
est associé(e) au premier et/ou à l'autre composant (6, 7, 8, 8', 8", 8'", 9).

9. Dispositif selon l'une des revendications 3 à 8, **caractérisé en ce que** le premier et/ou l'autre composant est réalisé sous la forme des alternatives suivantes :
- corps déformable élastiquement, en forme de ruban,
- allongé, pratiquement rigide,
- disposé dans un module de mesure de longueur, fixé de façon extractible sur le boîtier (2), en particulier par un support.

10. Dispositif selon l'une des revendications 3 à 9, **caractérisé en ce que** le guidage du premier et/ou de l'autre composant (6, 7, 8, 8', 8", 9) est réalisé de manière qu'il soit maintenu à la position déployée par une liaison avec friction.

11. Dispositif selon l'une des revendications 3 à 10, **caractérisé en ce que** l'extrémité opposée du premier et/ou de l'autre composant (7, 8) est réalisée sous la forme de crochet de mesure (16) qui, le cas échéant, est déplaçable de la valeur de l'épaisseur du matériau du crochet de mesure (16).

12. Dispositif selon l'une des revendications 1 à 11, **caractérisé en ce que**, sur le premier composant (6, 7, 9), est disposée une troisième échelle (13), dont le point zéro est matérialisé par la face, opposée au boîtier, du composant (6, 7, 9).

13. Dispositif selon l'une des revendications 1 à 12, **caractérisé en ce que** sur le boîtier (2) est disposée au moins une deuxième échelle (12) pour la mesure des distances, dont le point zéro est matérialisé par la butée de mesure (20).
